# EUROPÄISCHE PATENTSCHRIFT

(11) **EP 0 635 419 B1**
(45) Veröffentlichungstag und Bekanntmachung des Hinweises auf die Patenterteilung: **02.10.1996**
(21) Anmeldenummer: 94108929.4
(22) Anmeldetag: 10.06.1994
(51) Int. Cl.: B62D 33/06

(54) **Vordere Lageranordnung für ein kippbares Fahrerhaus eines Lastkraftwagens**
Front bearing assembly for a tilt cab truck
Dispositif de palier avant pour la cabine basculante d'un camion

(30) Priorität: 23.07.1993 AT 1474/93
(43) Veröffentlichungstag der Anmeldung: 25.01.1995
(73) Patentinhaber: STEYR NUTZFAHRZEUGE AG, A-4400 Steyr (AT)
(72) Erfinder: Wenzl, Kurt, Dipl.-Ing., A-4048 Puchenau (AT); Burgholzer, Johann, A-4442 Kleinraming (AT)

(56) Entgegenhaltungen:
- EP-A- 0 355 346
- DE-A- 2 229 436
- DE-A- 4 300 757

## Beschreibung

Die Erfindung betrifft eine vordere Lageranordnung für ein kippbares Fahrerhaus eines Lastkraftwagens, mit wenigstens zwei am Fahrzeugrahmen befestigten Lagerkonsolen, an denen das Fahrerhaus vorn über auf zueinander fluchtenden Lagerachsen angeordnete elastische Lager abgestützt ist, die in am Fahrerhaus-Boden befestigten Lagerschalen aufgenommen sind.

Eine solche Lageranordnung ist an serienmäßigen STEYR-Lastkraftwagen des Typs BR 92 realisiert. Dabei liegt dieser Lageranordnung folgende Problematik zugrunde. Um einen zufriedenstellenden Fahrkomfort zu erzielen, müssen die Fahrerhaus-Lager möglichst große Federwege zulassen. Diese werden über die Ausgestaltung und das Material der elastischen Lager vorgegeben. Relativ weiche elastische Lager, welche relativ große Federwege ermöglichen, erweisen sich aber beim Kippen des Fahrerhauses insofern als nachteilig, als das Fahrerhaus vor allem im Bereich des Totpunktes große Vertikalbewegungen ausführen kann, was zu Engstellen bzw. Kollisionen zwischen Fahrerhausteilen und Fahrgestellteilen wie Stoßfänger, Abschlepphaken etc. führen könnte. Diesem Problem hat man bisher dadurch abgeholfen, daß bei der Konstruktion des Fahrzeuges von vornherein entsprechend große Freiräume zwischen fahrerhaus- und fahrgestellseitigen Teilen vorgesehen wurden, was aber aus optischen Gründen an sich nicht erwünscht war. Alternativ hierzu bestand die Möglichkeit, die elastischen Lager nicht so extrem nachgiebig auszugestalten, was aber wiederum den Federungskomfort des Fahrerhauses verschlechtert hätte.

Es ist daher Aufgabe der Erfindung, eine vordere Lageranordnung der gattungsgemäßen Art dahingehend auszubilden, daß die elastischen Lager auf eine komfortable Federung des Fahrerhauses ausgelegt sind, trotzdem aber beim Kippen des Fahrerhauses keine Kollisionen zwischen Fahrerhaus-Teilen und fahrgestellseitigen Teilen auftreten können und überdies auch keine Einschränkungen hinsichtlich der designmäßigen Gestaltung des Fahrzeuges notwendig sind.

Diese Aufgabe ist erfindungsgemäß dadurch gelöst, daß dem Fahrerhaus eine Vorrichtung zur Einfederungsverhinderung beim Kippvorgang zugeordnet ist, entsprechend den Merkmalen des 〈Kennzeichnenden Teils〉 des unabhängigen Anspruchs 1.

Vorteilhafte Ausgestaltungen dieser Erfindung sind in den Unteransprüchen gekennzeichnet. So hat das Gleitstück insbesondere eine bananenförmig gekrümmte Außenkontur, mit einer relativ stark gekrümmten Anlauffläche und einer weniger stark gekrümmten Abstützfläche, welche Flächen nacheinander beim Kippvorgang des Fahrerhauses an der lagerkonsolenseitigen Rampe zur Anlage kommen. Das Gleitstück ist vorzugsweise - von der der Unterseite des Fahrerhauses aus senkrecht durch die Lagermitte gehend gesehen - an tiefster Stelle der Lagerschale angeordnet Das Gleitstück kann entweder einstückig mit der Lagerschale ausgebildet oder als vorgefertigtes Teil an der Lagerschale befestigt und beispielsweise für ein Aufklipsen an letzterer ausgebildet sein. Falls das Gleitstück als vorgefertigtes Teil vorgesehen ist, kann dieses aus abriebfestem Kunststoff bestehen. Außerdem kann das Gleitstück aus einem metallischen Grundkörper und einem die Gleitflächen aufweisenden, austauschbaren Aufsatzteil aus abriebfestem Kunststoff bestehen. Letzteres ermöglicht bei Beschädigung des Aufsatzteiles auf einfache Weise dessen Ersatz. Die Rampe, an der das Gleitstück beim Kippen des Fahrerhauses aufläuft, kann durch das schräg nach vorn geneigte Dach eines Lagerbügels gebildet sein, der wiederum ein Teil der Lagerkonsole bildet. Dieser Lagerbügel ist einteilig ausgebildet, weist unten zwei vorzugsweise in einer Ebene liegende, am Fahrzeugrahmen abgestützt anschraubbare Befestigungsstege und dazwischen - als gezielt verformbaren Abschnitt - einen hochgezogenen Bereich mit - von der Seite gesehen - etwa U-förmigen Profil mit einem vorderen Schenkel, einem hinteren Schenkel und oben dem besagten schrägen Dach auf. An den Außenseiten des Lagerbügel-Daches sind Seitenwangen mit gezielt verformbaren Bereichen befestigt, insbesondere angeschweißt, zwischen welchen Seitenwangen eine Lagerschale mit dem darin gegebenen elastischen Lager axial fixiert aufgenommen ist.

Mit der erfindungsgemäßen Konstruktion ist das der Erfindung zugrunde liegende Problem auf vergleichsweise einfache und billig realisierbare Weise gelöst. Es entstehen praktisch nur mehr Kosten, die sich aus der Herstellung und/oder Montage des Gleitstückes ergeben. Dies insbesondere auch deshalb, weil es so an der zugehörigen Lagerschale angeordnet ist, daß eine an der Lagerkonsole ohnehin vorhandene Fläche als Auflauframpe benutzbar ist.

Nachstehend ist die erfindungsgemäße Lösung anhand eines in der Zeichnung dargestellten Ausführungsbeispieles noch näher erläutert. In der Zeichnung zeigen:
- Fig. 1: eine Seitenansicht eines Ausführungsbeispiels einer in Verbindung mit der Erfindung anwendbaren Lagerkonsole,
- Fig.2: die Lagerkonsole gemäß Fig. 1 in Vorderansicht,
- Fig. 3: in Seitenansicht eine vordere Fahrerhaus-Lagerung erfindungsgemäßer Bauart bei in Fahrstellung befindlichem Fahrerhaus und unter Verwendung der Lagerkonsole gemäß Fig. 1 und 2, wobei aus Übersichtlichkeitsgründen in der Zeichnung die vordere Seitenwange der Lagerkonsole weggelassen wurde,
- Fig. 4: die Lageranordnung gemäß Fig. 3 in Vorderansicht,
- Fig. 5: die Fahrerhauslagerung gemäß Fig. 3 und 4 in einer Stellung des Fahrerhauses beim Kippvorgang, und
- Fig. 6: die Lageranordnung gemäß Fig. 3 und 4 in einer Stellung, in der das Fahrerhaus vollständig nach vorne gekippt ist.

In den Figuren sind gleiche bzw. einander entsprechende Bauteile mit gleichen Bezugszeichen angezogen.

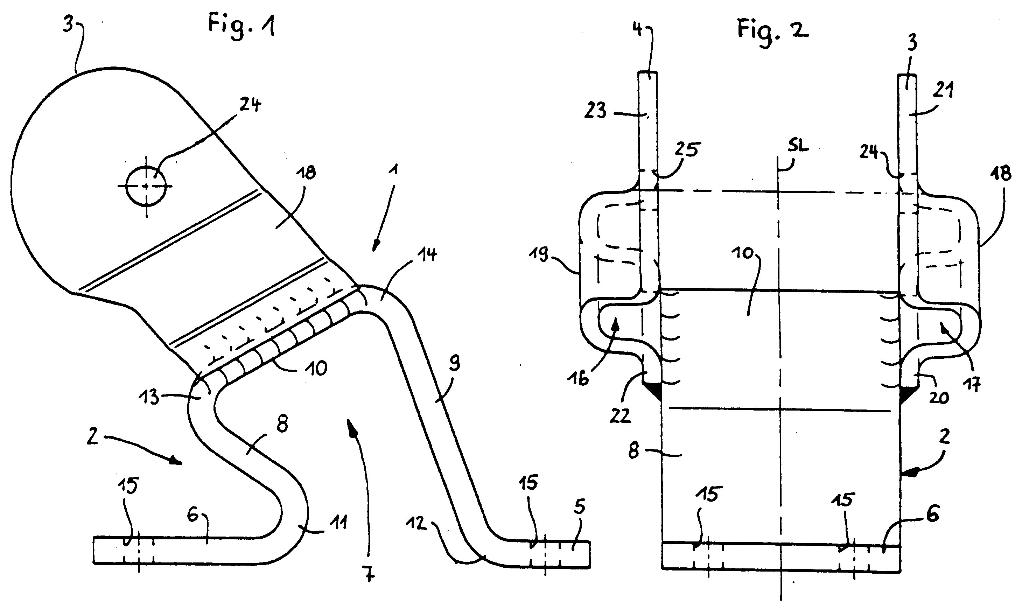

Die in der Zeichnung mit 1 bezeichnete, in Fig. 1 und 2 als Einzelteil dargestellte und in Verbindung mit der erfindungsgemäßen Lösung bevorzugt verwendbare Lagerkonsole setzt sich aus drei Einzelteilen zusammen, nämlich einem Lagerbügel 2 und zwei Seitenwangen 3, 4. Der Lagerbügel 2 weist unten zwei vorzugsweise in einer Ebene liegende, am Fahrzeugrahmen abgestützt anschraubbare Befestigungsstege 5, 6 und dazwischen einen hochgezogenen Bereich 7 mit - von der Seite gesehen - etwa U-förmigem Profil auf. Dieser hochgezogene Bereich 7 bildet am Lagerbügel 2 einen in Fahrzeuglängsrichtung bei großer Krafteinwirkung von vorn, hinten und oben gezielt nach hinten und unten verformbaren Abschnitt. Dieser U-förmig hochgezogene Bereich 7 besteht aus einem vorderen Schenkel 8, einem hinteren Schenkel 9 und einem Dach 10. Im dargestellten Ausführungsbeispiel ist der U-förmig hochgezogene Bereich 7 nach vorne gekippt, so daß dessen vorderer Schenkel 8 kürzer als der hintere Schenkel 9 ist. Beide Schenkel 8, 9 können entweder annähernd parallel zueinander oder - wie dargestellt - einen spitzen Winkel einschließend zueinander verlaufen. Vorzugsweise ist jedoch das im wesentlichen ebene Dach 10 des hochgezogenen Bereiches 7 - wie dargestellt - schräg von vorn nach hinten ansteigend angeordnet und erstreckt sich zumindest annähernd senkrecht zum hinteren Schenkel 9. Die Neigung des hinteren Schenkels 9 nach vorne ist dabei so, daß dieser einen Winkel von etwa 75° zur Befestigungsebene einschließt. Die demgegenüber größere Neigung des vorderen Schenkels 8 ist so festgelegt, daß dieser einen Winkel von etwa 45° mit der Befestigungsebene einschließt. Jeder der beiden Schenke 8,9 des U-förmig hochgezogenen Bereiches 7 geht über einen Bogen 11, 12, 13, 14 mit relativ großem Radius in den Befestigungssteg 5 bzw. 6 sowie das Dach 10 über, wobei die Bögen 11, 12 die besonders verformbaren Zonen des Lagerbügels 2 bei frontaler und vertikaler Krafteinwirkung bilden.

Der Lagerbügel 2 ist einteilig ausgebildet und entweder durch ein Biegeteil aus Bandstahl oder durch Absägen von einem seine Endform aufweisenden Stahlstrangprofil realisierbar. Die Bohrungen 15 in den Befestigungsstegen 5, 6 dienen zur Hindurchführung von Schrauben für die Befestigung der Lagerkonsole 1 am Fahrzeugrahmen.

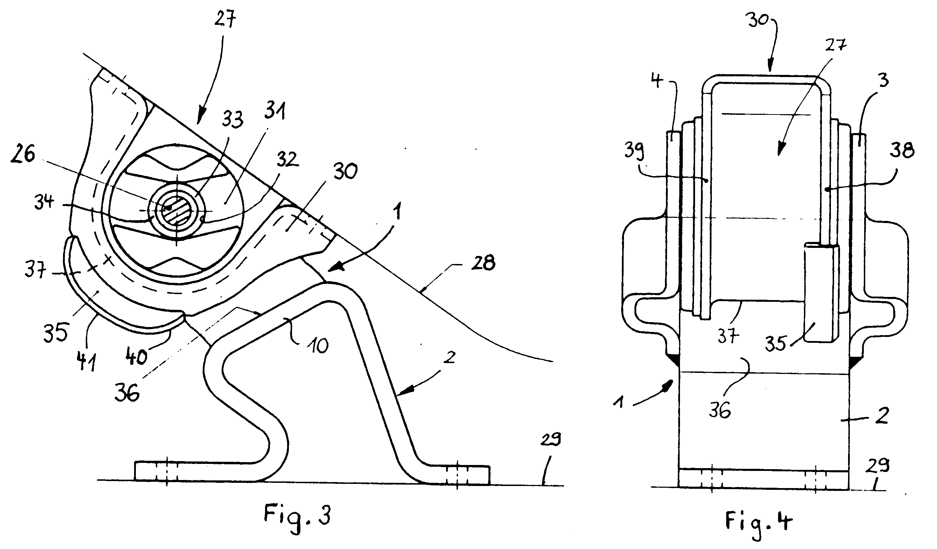

Die beiden Seitenwangen 3, 4 der Lagerkonsole 1 sind zur Längsmittelebene SL (Fig. 2) des Lagerbügels 2 spiegelsymmetrisch ausgebildet und am Dach 10 des hochgezogenen Lagerbügel-Bereiches 7, dort entweder oben oder seitlich außen an diesem anschließend, nach oben - und im Fall des dargestellten Beispiel schräg nach vorn - abragend angeschweißt. Die beiden Seitenwangen 3, 4 weisen vorgegebene Faltzonen 16 bzw. 17 auf, die Bereiche bilden, welche bei hoher Vertikalkrafteinwirkung von oben nach unten, aber bei Horizontalkrafteinwirkung auch in umgekehrter Richtung gezielt verformbar sind. Diese Faltzone 16 bzw. 17 in jeder Seitenwange 3, 4 ist durch eine über deren volle Breite und vorzugsweise nach außen gehende Ausbuchtung 18 bzw. 19 realisiert, wobei sich die an dieser Ausbuchtung 18 bzw. 19 oben und unten anschließenden Seitenwangen-Abschnitte 20, 21 bzw. 22, 23 vorzugsweise jeweils in einer Ebene erstrecken. Im dargestellten Ausführungsbeispiel verlaufen die Ausbuchtungen 18 bzw. 19 in jeder der beiden Seitenwangen 3, 4 zumindest annähernd parallel zum Dach 10 des hochgezogenen Lagerbügel-Bereiches 7. Die beiden Seitenwangen 3, 4 sind aus Stahlblech vorzugsweise ausgestanzt und formgepreßt. Die an einer fertigen Lagerkonsole 1 in beiden Seitenwangen 3, 4 zueinander fluchtend gegebenen Durchgangsbohrungen 24, 25 dienen zur Durchführung einer spannschraube 26 über welche ein aus Fig. 3 bis 6 ersichtliches vorderes Fahrerhaus-Lager 27 zwischen den oberen Abschnitten 21, 23 der beiden Seitenwangen 3, 4 festspannbar ist. Über dieses Lager 27 ist ein kippbares Fahrerhaus des Lastkraftwagens schwenkbar an einer jeweiligen Lagerkonsole 1 elastisch abgestützt. Das Fahrerhaus ist in den Fig. 3 bis 6 nur durch eine dessen Boden folgende Linie 28 angedeutet und im übrigen vorne an wenigstens zwei der besagten rahmenseitigen Lagerkonsolen 1 angelenkt. Der Fahrzeugrahmen ist durch die Linie 29 angedeutet.

Ein zwischen den Seitenwangen 3, 4 einer Lagerkonsole 1 aufgenommenes vorderes Fahrerhaus-Lager 27 besteht im dargestellten Ausführungsbeispiel aus einer am Boden des Fahrerhauses 28 befestigten Lagerschale 30, die ein Gummilager 31 aufnimmt, in dessen zentrale Durchgangsbohrung 32 eine Stahlbuchse 33 mit innen eingepreßter Kunststoffbuchse einvulkanisiert ist. Das Gummilager 31 ist drehbar auf einer Lagerhülse 34 gelagert, die mittels der hindurchgeführten Spannschraube 26 zwischen den Seitenwangen 3, 4 der Lagerkonsole 1 festgespannt ist. Das Gummilager 31 stellt aufgrund des verwendeten Gummimaterials und seiner querschnittsmäßigen Gestaltung den gewünschten Einfederweg zwischen Fahrerhaus 28 und Rahmen 29 sicher.

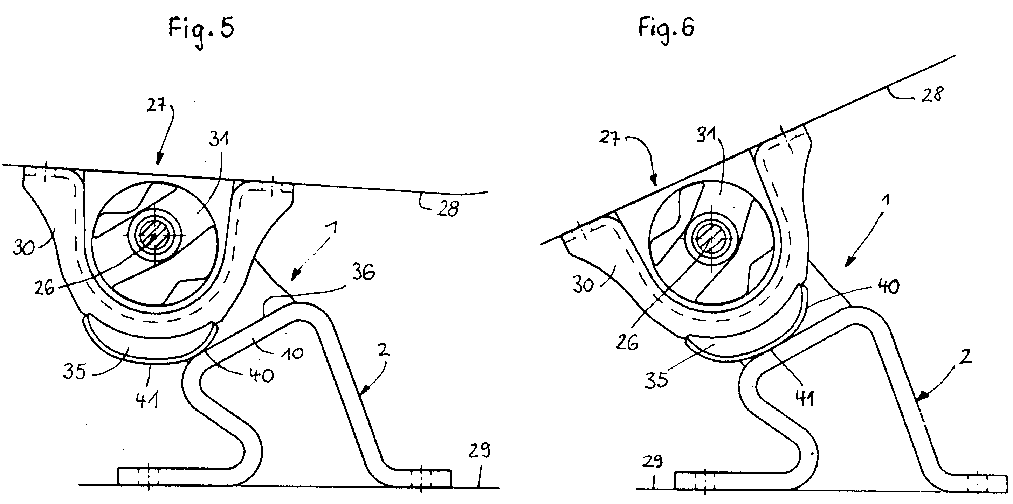

Entsprechend der Lehre der Erfindung ist dem Fahrerhaus eine Vorrichtung zur Einfederungsverhinderung beim Kippvorgang zugeordnet, dergestalt, daß an der ein elastisches Lager 31 aufnehmenden Lagerschale 30 ortsfest ein speziell gestaltetes Gleitstück 35 angeordnet ist, das bei ungekipptem Fahrerhaus (siehe Fig. 3) dessen Einfederung nicht behindert, aber beim Kippen des Fahrerhauses ab einem bestimmten Kippwinkel (siehe Fig. 5) auf eine stirnseitig der zugehörigen Lagerkonsole 1 gegebene Rampe 36 aufläuft und beim Weiterkippen des Fahrerhauses dann dessen vertikale Einfederung verhindert (siehe Fig. 6). Dieses Gleitstück 35 kann entweder an der Außenseite des Zentralkörpers 37 der Lagerschale 30 oder einer außenseitig des letzteren (37) gegebenen Versteifungsrippe 38, 39 angeordnet und dabei entweder einstückig mit der Lagerschale 30 ausgebildet, insbesondere angeformt, oder als vorgefertigtes Teil außen an der Lagerschale 30 befestigt sein. Dabei können die Lagerschale 30 und das Gleitstück 35 für ein Aufklipsen des letzteren ausgebildet sein. Im dargestellten Ausführungsbeispiel ist das Gleitstück 35 von der Unterseite des Fahrerhauses 28 aus vertikal durch die Lagermitte gesehen an tiefster Stelle der Lagerschale 30, dort an deren Versteifungsrippe 38, angeordnet.

Falls das Gleitstück 35 als Einzelteil vorgefertigt ist, besteht dieses beispielsweise aus abriebfestem Kunststoff. Es ist aber auch möglich, daß das Gleitstück 35 aus einem metallischen Grundkörper und einem die Gleitflächen aufweisenden, austauschbaren Aufsatzteil aus abriebfestem Kunststoff besteht, was bei Beschädigung des letzteren einen leichten Austausch ermöglicht.

Im dargestellten Ausführungsbeispiel ist die Rampe 36 an der Lagerkonsole 1 durch die Oberseite des schräg nach vorn geneigten Daches 10 am Lagerbügel 2 gebildet, weshalb das Gleitstück 35 abstandsmäßig hinsichtlich seiner Auflaufhöhe und Kontur entsprechend in Bezug auf die Distanz zwischen Lagerachse 26 und Rampe 36 abzustimmen ist. Wie aus den Fig. 4 bis 6 ersichtlich, hat hierzu das Gleitstück 35 eine etwa bananenförmig gekrümmte Außenkontur mit einer relativ stark gekrümmten hinteren Anlauffläche 40 und einer davor folgenden, weniger stark gekrümmten Abstützfläche 41. Diese Flächen 40, 41 kommen nacheinander beim Kippen des Fahrerhauses an der lagerkonsolenseitigen Rampe 36 zur Anlage, was aus der Bildfolge ausgehend von Fig. 3 über Fig. 5 nach Fig. 6 ersichtlich ist.

## Patentansprüche

1. Vordere Lageranordnung für ein kippbares Fahrerhaus eines Lastkraftwagens, mit wenigstens zwei am Fahrzeugrahmen (29) befestigten Konsolen (1), an denen das Fahrerhaus (28) vorn über auf zueinander fluchtenden Lagerachsen (26) angeordnete elastische Lager (31) abgestützt ist, die in am Fahrerhaus-Boden befestigten Lagerschalen (30) aufgenommen sind, dadurch gekennzeichnet, daß dem Fahrerhaus (28) eine dessen Einfederung beim Kippvorgang verhindernde Vorrichtung zugeordnet ist, bestehend aus einem eine gekrümmte Außenkontur (40, 41) aufweisenden, ortsfest an einer ein elastisches Lager (31) aufnehmenden Lagerschale (30) angeordneten Gleitstück (35), das beim Kippen des Fahrerhauses mit der Lagerschale (30) mitverschwenkbar ist und ab einem bestimmten Kippwinkel mit seiner gekrümmten Außenkontur (40, 41) auf eine stirnseitig an der zugehörigen Lagerkonsole (1) gegebene Rampe (36) aufläuft sowie beim Weiterkippen des solchermaßen abgestützten Fahrerhauses dann dessen vertikale Einfederung verhindert, jedoch bei ungekipptem Fahrerhaus in einer dessen Einfederung nicht behindernden Position weg von der Rampe (36) angeordnet ist.

2. Lageranordnung nach Anspruch 1, dadurch gekennzeichnet, daß das Gleitstück (35) an der Außenseite des Zentralkörpers (37) der Lagerschale (30) oder einer außenseitig des letzteren (37) gegebenen Versteifungsrippe (38, 39) angeordnet ist.

3. Lageranordnung nach einem der vorhergehenden Ansprüche, dadurch gekennzeichnet, daß das Gleitstück (35) einstückig mit der Lagerschale (30) ausgebildet, insbesondere an dieser angeformt ist.

4. Lageranordnung nach einem der Ansprüche 1 und 2, dadurch gekennzeichnet, daß das Gleitstück (35) als vorgefertigtes Teil außen an der Lagerschale (30) befestigt ist.

5. Lageranordnung nach Anspruch 4, dadurch gekennzeichnet, daß die Lagerschale (30) und das Gleitstück (35) für ein Aufklipsen des letzteren ausgebildet sind.

6. Lageranordnung nach Anspruch 4, dadurch gekennzeichnet, daß das Gleitstück (35) aus abriebfestem Kunststoff besteht.

7. Lageranordnung nach einem der vorhergehenden Ansprüche, dadurch gekennzeichnet, daß das Gleitstück (35) aus einem metallischen Grundkörper und einem die Gleitflächen aufweisenden, austauschbaren Aufsatzteil aus abriebfestem Kunststoff besteht.

8. Lageranordnung nach einem der vorhergehenden Ansprüche, dadurch gekennzeichnet, daß das Gleitstück (35) - von der Unterseite des Fahrerhauses (28) aus senkrecht durch die Lager-Mitte gehend gesehen - an tiefster Stelle der Lagerschale (30) angeordnet ist.

9. Lageranordnung nach einem der vorhergehenden Ansprüche, dadurch gekennzeichnet, daß das Gleitstück (35) eine bananenförmig gekrümmte Außenkontur hat, mit einer relativ stark gekrümmten hinteren Anlauffläche (40) und einer davor folgenden, weniger stark gekrümmten Abstützfläche (41), welche Flächen nacheinander beim Kippvorgang des Fahrerhauses an der lagekonsolenseitigen Rampe (36) zur Anlage kommen.

10. Lageranordnung nach Anspruch 1, dadurch gekennzeichnet, daß die Rampe (36) durch die Oberseite des schräg nach vorn geneigten Daches (10) eines Lagerbügels (2) gebildet ist, der als Basis-Teil der Lagerkonsole (1) durch ein einteiliges Biegeteil realisiert ist, unten zwei vorzugsweise in einer Ebene liegende, am Fahrzeugrahmen abgestützt anschraubbare Befestigungsstege (5, 6) und dazwischen - als gezielt verformbaren Abschnitt - einen hochgezogenen Bereich (7) mit - von der Seite gesehen- etwa U-förmigem Profil mit einem vorderen Schenkel (8), einem hinteren Schenkel (9) und oben das schräge Dach (10) aufweist, an dessen Außenseiten Seitenwangen (3, 4) mit gezielt verformbaren Bereichen befestigt, insbesondere angeschweißt sind, zwischen welchen Seitenwangen (3, 4) eine Lagerschale (30) mit dem darin gegebenen elastischen Lager (31) axial fixiert aufgenommen ist.

## Claims

1. Front mount arrangement for a tilting cab of a truck, with at least two consoles (1) attached to the vehicle frame (29), at which consoles the cab (28) is supported at the front via elastic bearings (31) that are arranged on bearing shafts (26) aligned relative to each other and are supported in bearing shells (30) attached to the vehicle floor, characterised in that a device assigned to the cab (28) prevents the cab's spring compression during tilting operations, consists of a sliding element (35) having a curved outer contour (40, 41) and is attached in a fixed manner to a bearing shell (30) holding an elastic bearing (31), which sliding element (35) can be slewed together with the bearing shell (30) when the cab is being tilted and, from a certain tilting angle onwards, rolls with its curved outer contour (40, 41) on to a ramp (36) provided on the front side of the associated bearing console (1) and, if the cab supported in such a way is tilted further, prevents the cab's vertical spring compression, but, if the cab is not tilted, is located away from said ramp (36) in a position in which it does not impede the cab's spring compression.

2. Mount arrangement according to Claim 1, characterised in that the sliding element (35) is located on the outside of the central body (37) of the bearing shell (30) or on a reinforcement rib (38, 39) on the outside of said central body (37).

3. Mount arrangement according to one of the foregoing Claims, characterised in that the sliding element (35) is made in a single piece with the bearing shell (30) and is particularly shaped so as to follow the contour of said bearing shell (30).

4. Mount arrangement according to one of the Claims 1 and 2, characterised in that the sliding element (35) is attached as a prefabricated part to the outside of the bearing shell (30).

5. Mount arrangement according to Claim 4, characterised in that the bearing shell (30) and the sliding element (35) are designed so that the latter can be clipped into place.

6. Mount arrangement according to Claim 4, characterised in that the sliding element (35) is made of abrasion-resistant synthetic material.

7. Mount arrangement according to one of the foregoing Claims, characterised in that the sliding element (35) consists of a metal basic body and an exchangeable add-on part having the sliding faces and made of abrasion-resistant synthetic material.

8. Mount arrangement according to one of the foregoing Claims, characterised in that the sliding element (35), when viewed from the underside of the cab (28) in a vertical manner through the centre of the mounts, is arranged at the lowest point of the bearing shell (30).

9. Mount arrangement according to one of the foregoing Claims, characterised in that the sliding element (35) has a banana-shaped curved outer contour with a relatively heavily curved rear contact face (40) and a less heavily curved support face (41) arranged before said rear contact face (40), which faces consecutively come into contact with the console-mounted ramp (36) during cab tilting operations.

10. Mount arrangement according to Claim 1, characterised in that the ramp (36) is formed by the upper side of the obliquely and forwardly inclined roof (10) of a mount bow (2), which is designed as the base part of the mount console (1) and is a single-piece curved part and, at the lower end, has two mounting webs (5, 6) which can be screwed on, are preferably arranged in the same plane, are supported on the vehicle frame and have in between - as a deliberately deformable section - a raised area (7) with - when viewed from the side - an approximately U-shaped section with a front leg (8), a rear leg (9) and, at the top, the oblique roof (10), to whose outer sides are attached, particularly welded on, lateral elements (3, 4) with deliberately deformable areas, between which lateral elements (3, 4) a bearing shell (30) with an elastic bearing (31) located in said bearing shell (30) is axially fastened.

## Revendications

1. Agencement de palier antérieur pour une cabine de conducteur basculante d'un camion avec au moins deux consoles (1) fixées sur le châssis du véhicule (29), consoles sur lesquelles la cabine de conducteur (28) s'appuie en avant au moyen de paliers (31) élastiques disposés sur des axes de palier (26) qui sont en alignement l'un avec l'autre, paliers qui sont logés dans des coquilles de paliers (30) fixées sur le plancher de la cabine de conducteur,
caractérisé en ce que
l'on associe à la cabine de conducteur (28) un dispositif qui sert à empêcher la compression élastique lors du processus de basculement, dispositif consistant en une pièce coulissante (35) qui présente un contour extérieur recourbé (40, 41) et qui est disposée à poste fixe sur une coquille de palier (30) recevant un palier élastique (31), pièce coulissante (35) qui, lors du basculement de la cabine de conducteur, peut pivoter en même temps que la coquille de palier (30) et, à partir d'un certain angle de basculement, roule par son contour extérieur recourbé (40, 41) sur une rampe (36) établie du côté frontal sur la console de palier correspondante (1) et, lors de la poursuite du basculement de la cabine de conducteur venue en appui, empêche alors la compression élastique dans le sens vertical, mais est cependant disposée, quand la cabine de conducteur n'est pas basculée, dans une position écartée de la rampe (36) qui n'empêche pas la compression élastique.

2. Agencement de palier selon la revendication 1 caractérisé en ce que
la pièce coulissante (35) est disposée sur la face extérieure du corps central (37) de la coquille de palier (30) ou sur une nervure de raidissement (38, 39) se trouvant du côté extérieur de ce dernier corps (37).

3. Agencement de palier selon l'une des revendications précédentes,
caractérisé en ce que
la pièce coulissante (35) est constituée d'une seule pièce avec la coquille de palier (30), en particulier en venant de moulage avec celle-ci.

4. Agencement de palier selon l'une des revendications 1 et 2,
caractérisé en ce que
la pièce coulissante (35) est fixée, sous la forme d'une pièce préfabriquée à l'extérieur, sur la coquille de palier (30).

5. Agencement de palier selon la revendication 4,
caractérisé en ce que
la coquille de palier (30) et la pièce coulissante (35) sont constituées de façon à permettre un enclipsage de cette dernière.

6. Agencement de palier selon la revendication 4,
caractérisé en ce que
la pièce coulissante (35) est en une matière plastique résistant à l'abrasion.

7. Agencement de palier selon l'une des revendications précédentes,
caractérisé en ce que
la pièce coulissante (35) consiste en un corps de base et en une pièce de garniture interchangeable, présentant les surfaces coulissantes, réalisée en une matière plastique résistant à l'abrasion.

8. Agencement de palier selon l'une des revendications précédentes,
caractérisé en ce que
la pièce coulissante (35), vue à partir du côté inférieur de la cabine de conducteur (28) en passant perpendiculairement par le milieu du palier, est disposée au point le plus bas de la coquille de palier (30).

9. Agencement de palier selon l'une des revendications précédentes,
caractérisé en ce que
la pièce coulissante (35) a un contour extérieur recourbé, en forme de banane, avec une surface postérieure de roulement (40) recourbée d'une façon relativement forte et une surface d'appui suivante en avant, moins fortement recourbée (41), lesquelles surfaces viennent en appui l'une après l'autre, lors du processus de basculement de la cabine de conducteur, sur la rampe (36) située du côté de la console de palier.

10. Agencement de palier selon la revendication 1,
caractérisé en ce que
la rampe (36) est formée par la face supérieure du toit (10) inclinée obliquement vers l'avant, toit qui est réalisé comme partie servant de base à la console de palier (1) par une partie flexible d'une seule pièce, et présente en bas deux pattes de fixation (5, 6) se trouvant de préférence dans un même plan, pattes qui peuvent être boulonnées en s'appuyant sur le châssis du véhicule, et entre les deux - en tant que section volontairement déformable - une zone se dressant vers le haut (7) avec, en vue de côté, un profil ayant à peu près la forme d'un U avec une branche antérieure (8), une branche postérieure (9) et, en haut, le toit oblique (10) sur les côtés extérieurs duquel sont fixées des joues latérales (3, 4) avec des zones volontairement déformables, joues latérales (3, 4) qui sont en particulier soudées et entre lesquelles est logée, de façon à être fixée axialement, une coquille de palier (30) avec le palier élastique (31) placé dedans.
